# EUROPEAN PATENT APPLICATION

(11) **EP 4 832 234 A1**
(43) Date of publication of application: **28.10.2026**
(21) Application number: 25852256.4
(22) Date of filing: 04.08.2025
(51) Int. Cl.: H01M 50/533, B21D 5/04, B21D 35/00

(54) **LEAD BENDING DEVICE AND LEAD BENDING METHOD USING SAME**

(30) Priority: 08.08.2024 KR 20240106422
(71) Applicant: LG Energy Solution, Ltd., Seoul 07335 (KR)
(72) Inventor: HYUN, Seongwon, Daejeon 34122 (KR)
(74) Representative: Plasseraud IP
(86) International application number: PCT/KR2025/011626
(87) International publication number: WO 2026/034944

(57) **Abstract**

This lead bending device is configured to bend a plurality of first leads and a plurality of second leads having opposite polarities and alternately arranged along a first direction. The lead bending device comprises: a first bending tool for bending a lead of a first lead group which includes at least one first lead and at least one second lead; and a second bending tool for bending a lead of a second lead group which is located on one side of the first lead group in the first direction and includes at least one first lead and at least one second lead. The first bending tool and the second bending tool may be configured to simultaneously bend two or more leads having the same polarity among the plurality of first leads and the plurality of second leads.

## Description

### Technical Field

The present disclosure relates to a lead bending device and a lead bending method using the same.

### Background Art

Rechargeable batteries, capable of being recharged and discharged, are widely used for mobile devices such as a digital camera, a cellphone, and a notebook, and are particularly recently gaining attention as an energy source for an electric car and an energy storage system (ESS). Meanwhile, as high-capacity and high-power electricity is required for electric cars or ESS, medium-to-large battery devices such as battery modules containing multiple rechargeable batteries inside a housing and battery packs equipped with multiple battery modules are widely used.

As it is desirable to manufacture medium-to-large battery devices in as a small size and as a low weight as possible, a small prismatic battery cell and a pouch-type battery cell, which have a high charge density and have a low weight relative to capacity, are mostly used as battery cells (unit cells). Particularly, a pouch-type battery cell that uses an aluminum laminate sheet as an external housing has recently gained a lot of attention due to an advantage such as low weight, low production cost, and ease of deformation.

Meanwhile, battery cell leads are welded to busbars to electrically connect battery cells that constitute medium-to-large battery devices. Before the battery cell leads are welded to busbars, the battery cell leads are bent to closely adhere to the busbars.

However, when a usual bending method is used to bend a lead, the process time may become too long, and several issues such as battery variation and poor bending quality may arise.

### Detailed Description of the Invention

### Technical Goals

The present disclosure has been made in view of the above issues, and a goal to be achieved by the present disclosure is to provide a lead bending device configured to reduce the time spent on a lead bending process and a lead bending method using the same device.

### Technical solutions

A lead bending device according to the present disclosure, having an opposite polarity and configured to bend a plurality of first leads and a plurality of second leads that are disposed alternately along a first direction, may include a first bending tool configured to bend a lead of a first lead group that includes at least one of the first leads and at least one of the second leads, and a second bending tool configured to bend a lead of a second lead group that is positioned on one side of the first lead group in the first direction and including at least one of the first leads and at least one of the second leads. The first bending tool and the second bending tool may be configured to bend two or more leads having an identical polarity at the same time among the plurality of first leads and the plurality of second leads.

Each of the first bending tool and the second bending tool may be configured to be movable in the first direction and a second direction perpendicular to the first direction.

Each of the first bending tool and the second bending tool may include a plurality of pressing portions positioned along the first direction to be spaced apart at an equal interval and configured to bend the lead and a body portion from which the plurality of pressing portions protrude.

Each of the first bending tool and the second bending tool may include a body portion configured to be movable in the first direction and the second direction perpendicular to the first direction, and a plurality of pressing portions extended in one side of the second direction from the body portion and disposed to be spaced apart at an equal interval along the first direction.

A connecting portion of the body portion and the plurality of pressing portions may have a curved surface.

A thickness of the plurality of pressing portions may gradually decrease with increasing distance from the body portion.

Each number of the plurality of first leads and the plurality of second leads may be n, which is an even number. Each of the first bending tool and the second bending tool may have no more than n/2 of a plurality of pressing portions.

The lead bending device according to the present disclosure may further include a comb jig configured to be movable in a third direction perpendicular to both the first direction and the second direction and including a plurality of comb teeth and a plurality of guide slits formed between the plurality of comb teeth and into which the plurality of first leads and the plurality of second leads are inserted.

The comb jig may have, with respect to a center in the first direction, at least one of a plurality of comb teeth positioned on one side of the first direction whose surface facing the one side of the first direction is an inclined surface with respect to the first direction and a surface facing an opposite side of the first direction is a perpendicular surface with respect to the first direction, and with respect to a center in the first direction, at least one of a plurality of comb teeth positioned on the opposite side of the first direction whose surface facing the one side of the first direction is a perpendicular surface with respect to the first direction and a surface facing the opposite side of the first direction is an inclined surface with respect to the first direction.

A method of bending a lead according to the present disclosure, the method including forming a first lead group and a second lead group on one surface of a first busbar frame assembly by a plurality of first leads and a plurality of second leads having an opposite polarity to each other and disposed alternately along a first direction penetrating the first busbar frame assembly, a first operation in which a first bending tool configured to bend a plurality of second leads included in a first lead group on one side of the first direction, and a second operation in which a second bending tool, disposed to be spaced apart from the first bending tool on one side of the first direction, bends a plurality of first leads included in the second lead group to an opposite side of the first direction. The first operation and the second operation may be performed at the same time.

The method of bending a lead according to the present disclosure, the method further including forming a third lead group and a fourth lead group on one surface of a second busbar frame assembly by a plurality of second leads and a plurality of first leads having an opposite polarity to each other on an opposite side of the first busbar frame assembly and disposed alternately along the first direction penetrating the second busbar frame assembly, a third operation by a third bending tool bending the plurality of second leads included in the third lead group to one side of the first direction, and a fourth operation by a fourth bending tool, disposed to be spaced apart from the third bending tool on one side of the first direction, bending a plurality of first leads included in the fourth lead group to an opposite side of the first direction. The first to the fourth operations may be performed at the same time.

The first lead may be a positive electrode tab. The second lead may be a negative electrode tab.

Each number of the plurality of first leads and the plurality of second leads may be n, which is an even number. In the first operation, the first bending tool may bend no more than n/2 second leads at the same time. In the second operation, the second bending tool may bend no more than n/2 first leads at the same time.

The method of bending a lead may further include, before the first operation and the second operation are performed at the same time, a first standby operation in which the first bending tool may stand by in a state of being spaced apart from the plurality of first leads and the plurality of second leads and a first solo bending operation in which the second bending tool bends a plurality of second leads included in the second lead group to one side of the first direction.

The busbar frame assembly may include a plurality of busbars disposed along the first direction, and a first terminal portion and a second terminal portion, each of which is disposed on one side and an opposite side of the plurality of busbars in the first direction, and, the method further including, after the first operation and the second operation are performed at the same time, a first terminal portion contact operation bending a first lead, positioned at the outermost side on an opposite side of the first direction, to the opposite side of the first direction and bring the first lead into contact with the first terminal portion, and a second terminal part contact operation bending a second lead, positioned at the outermost side on one side of the first direction, to the one side of the first direction and bring the second lead into contact with the second terminal part.

The method of bending a lead, the method may further include, before the first operation and the second operation are performed at the same time, a lead aligning operation that aligns the plurality of first leads and the plurality of second leads in parallel by inserting a comb jig that includes a plurality of guide slits, into which the plurality of first leads and the plurality of second leads are inserted, between the plurality of first leads and the plurality of second leads.

In the second operation, the second bending tool may bend the plurality of first leads included in the second lead group and brings the plurality of first leads into contact with one surface of a plurality of second leads that are already bent.

A moving direction of the first bending tool in the first operation may be opposite to a moving direction of the second bending tool in the second operation.

### Effects of the Invention

According to an example embodiment of the present disclosure, it is possible to reduce time spent on a bending process by bending a plurality of leads at the same time.

In addition, by configuring the number of a plurality of pressing portions to be no more than half the number of leads, it is possible to reduce time spent on a bending process and prevent severe deformation of a battery or a busbar assembly.

### Brief Description of Drawings

FIG. 1 is a diagram illustrating a battery cell stack including a lead.
FIG. 2 is a schematic cross section of a busbar frame assembly.
FIG. 3 is a diagram illustrating a positional relationship between a plurality of leads and a busbar frame assembly.
FIG. 4 is a diagram illustrating a relationship between a lead bending device and a plurality of leads according to the present disclosure.
FIG. 5 is a diagram illustrating a bending tool included in a lead bending device according to the present disclosure.
FIG. 6 is a diagram illustrating a comb jig included in a lead bending device according to the present disclosure.
FIG. 7 is a diagram illustrating a relationship between a comb jig and a plurality of leads included in a lead bending device according to the present disclosure.
FIG. 8 is a diagram illustrating a first operation included in a method of bending a lead according to the present disclosure.
FIG. 9 is a diagram illustrating a second operation included in a method of bending a lead according to the present disclosure.
FIG. 10 is a diagram illustrating that a first operation and a second operation included in a method of bending a lead are performed at the same time.
FIG. 11 is a diagram illustrating a relationship between a lead bending device and a plurality of leads according to the present disclosure.
FIG. 12 is a diagram illustrating a third operation included in a method of bending a lead according to the present disclosure.
FIG. 13 is a diagram illustrating a fourth operation included in a method of bending a lead according to the present disclosure.
FIG. 14 is a diagram illustrating that a third operation and a fourth operation included in a method of bending a lead according to the present disclosure are performed at the same time.
FIG. 15 is a diagram illustrating that a first standby operation and a first solo bending operation included in a method of bending a lead according to the present disclosure are performed at the same time.
FIG. 16 is a diagram illustrating that a second standby operation and a second solo bending operation included in a method of bending a lead according to the present disclosure are performed at the same time.
FIGS. 17 to 19 are diagrams illustrating operations performed after a first to a fourth operations included in a method of bending a lead according to the present disclosure are performed.
FIG. 20 is a diagram illustrating a state after bending is completed by a method of bending a lead according to the present disclosure.

### Mode for Carrying Out the Invention

Before a detailed description of the present disclosure, the terms or words used in this specification and the claims should not be construed as being limited to their general or lexical meanings, and based on the principle that the applicant may properly define the disclosure with a notion of terms in a way that best explains the disclosure, should be interpreted as meanings and notions corresponding to the technical idea of the present disclosure. Accordingly, the example embodiments described in this specification and the configurations shown in the drawings represent merely the most desired embodiments of the present disclosure and do not encompass the entire technical idea of the present disclosure. Therefore, at the point of the present application, the possibility of various equivalents and modified examples that may serve as replacements should be understood.

Identical reference numbers or signs described in each appended drawing in this specification may represent components or elements performing practically the same functions. For the convenience of explanation and understanding, different example embodiments may use the same reference numbers or signs for explanation. In other words, when a plurality of drawings illustrate a component having the same reference number, not all the plurality of drawings may indicate one example embodiment.

In the description below, a singular expression includes a plural expression unless clearly indicated otherwise in context. Terms such as "comprise or include" or "configure" should be understood as indicating the existence of a feature, number, step, operation, element, component, or combination thereof described in this specification, and the terms do not exclude in advance the existence or the possibility of one or more additional features, numbers, steps, operations, elements, components, or combinations thereof.

Furthermore, in the description below, expressions such as above, upper portion, below, lower portion, side surface, frontside, and backside are expressed based on directions shown in drawings, and when a direction of an object changes, the expressions may be expressed differently.

In addition, in the description below, expressions such as a first direction D1, a second direction D2, and a third direction D3 may correspond to an X-axis, a Y-axis, and a Z-axis direction, which define a three-dimensional space, but is not limited thereto, and depending on a change of a definition of any one direction (for example, a first direction), remaining directions (for example, a second direction and a third direction) may change corresponding thereto.

In addition, to distinguish one element from another, terms including ordinals such as "first" and "second" may be used in this specification and claims. Such ordinals are used to distinguish identical or similar elements from each other, and by using such ordinals, the terms should not be construed as having limited meanings. As an example, elements combined with such ordinals should not be construed as having a limited order of use or order of arrangement by the numbers. As occasion demands, each ordinal may be replaced each other to be used.

Hereinafter, example embodiments of the present disclosure are described in detail with reference to the accompanying drawings. However, the spirit of the present disclosure may not be limited to suggested example embodiments. For example, a person of ordinary skill in the art who understands the spirit of the present disclosure may suggest other example embodiments included within the scope of the spirit of the present disclosure through adding, modifying, or deleting elements, but it may be understood that such suggestions may be included within the scope of the spirit of the present disclosure. Forms, sizes, and the like of elements in the drawings may be exaggerated for clearer explanation.

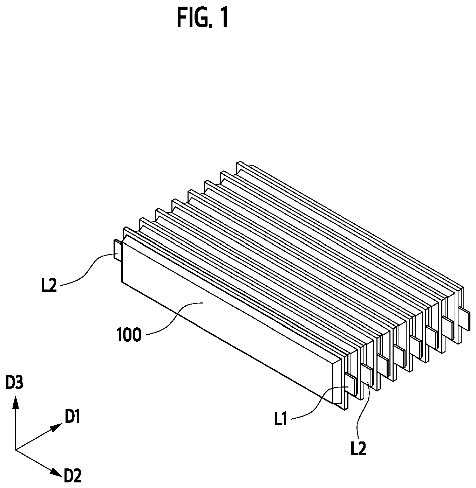

FIG. 1 is a diagram illustrating a battery cell stack 10 including a lead.

Referring to FIG. 1, the battery cell stack 10 may include a plurality of battery cells 100. In the battery cell stack 10, the plurality of battery cells 100 may be stacked in one direction. The battery cell 100 may be a pouch cell.

A pouch battery cell may include an electrode assembly, electrolyte, and a pouch exterior material. In the electrode assembly, a stack including a first electrode, a second electrode, and a separation layer may be formed by folding or winding. The pouch battery cell may include a first lead L1 electrically connected to the first electrode of the electrode assembly and protruding outside of the pouch exterior material and a second lead L2 electrically connected to the second electrode and protruding outside of the pouch exterior material. The first lead L1 and the second lead L2 may protrude both directions as what is illustrated in FIG. 1, or may protrude in one direction. The first lead L1 may be an aluminum material. The first lead L1 may serve as a positive electrode. The second lead L2 may be a copper material. The second lead L2 may serve as a negative electrode. However, the material and the polarity of the first lead L1 and the second lead L2 are not limited to what is described, and may be modified and implemented in various ways corresponding to a target performance of the battery cell stack 10.

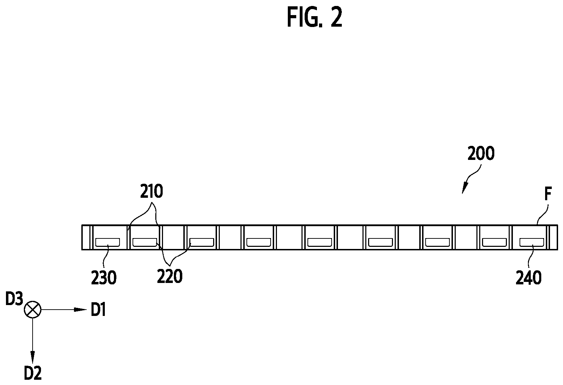

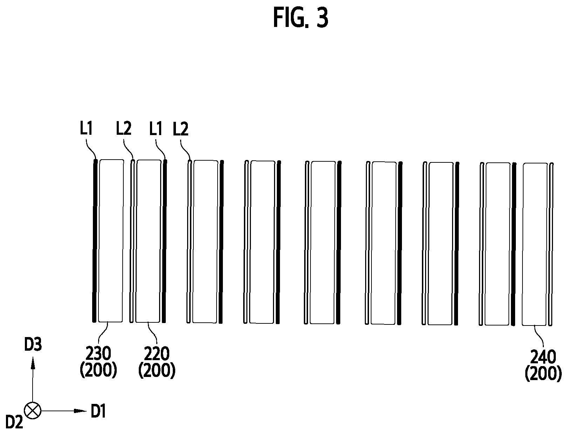

FIG. 2 is a schematic cross section of a busbar frame assembly 200. FIG. 3 is a diagram illustrating a positional relationship of a plurality of leads L1 and L2 and the busbar frame assembly 200.

Referring to FIGS. 2 and 3, the busbar frame assembly may include a plurality of busbars 220, a busbar frame F, and a first terminal portion 230 and a second terminal portion 240 disposed on both sides of the plurality of busbars 220.

The plurality of battery cells 100 constituting the battery cell stack 10 may be electrically connected by the busbar 220. The plurality of battery cells 100 constituting the battery cell stack 10 may be connected in series and/or in parallel depending on a connection method of the busbar 220. The busbar 220 may be provided between each of the plurality of leads L1 and L2 extended from the plurality of battery cells 100. As the leads L1 and L2 are bent by a bending process described later, the busbar 220 may be in contact with the leads L1 and L2 of the battery cell 100. The busbar 220 and the leads L1 and L2 of the battery cell 100 may be coupled to each other by welding. The busbar 220 may include a conductive material.

The busbar frame F may include a lead slit 210 configured to be penetrated by the leads L1 and L2 of the battery cell 100. The busbar frame F may be provided in a direction in which the leads L1 and L2 protrude in the battery cell stack 10. The busbar frame F may be provided one side and/or the opposite side of the battery cell stack 10. The busbar frame F may accommodate the busbar 220. The busbar frame F may include an electrically insulating material. The busbar frame F may accommodate the first terminal portion 230 and the second terminal portion 240 that are exposed outside of a case (not illustrated) surrounding the battery cell stack 10 and used as an external terminal. The first terminal portion 230 and the second terminal portion 240 may be positioned at the outermost side on the opposite direction to each other with respect to the first direction (for example, a direction D1 of FIG. 2). A pair of lead slits 210 may be disposed on both sides of the first terminal portion 230 and the second terminal portion 240, and accordingly, the first terminal portion 230 and the second terminal portion 240 may be positioned between a pair of leads L1 and L2 penetrating the pair of lead slits 210 described above.

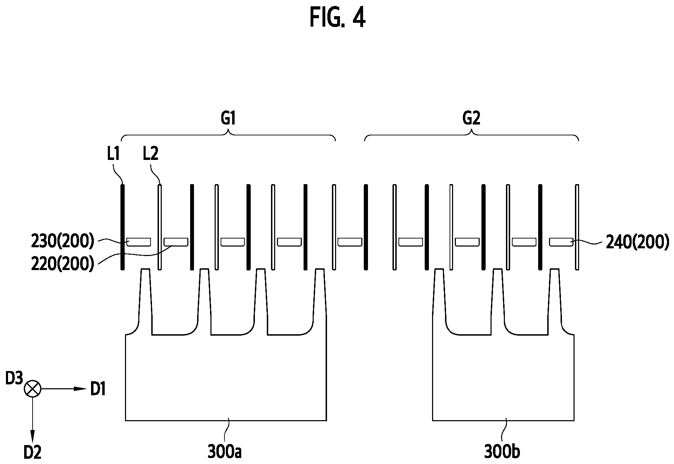

FIG. 4 is a diagram illustrating a relationship between a lead bending device and a plurality of leads L1 and L2 according to the present disclosure.

Referring to FIG. 4, the lead bending device may bend a plurality of first leads L1 and a plurality of second leads L2 having opposite polarities to each other and disposed alternately along a first direction. The lead bending device may bend the plurality of first leads L1 and the plurality of second leads L2 to the opposite direction to connect a plurality of battery cells in series and allow the plurality of first leads L1 and the plurality of second leads L2 to be in contact with each other.

The lead bending device may include a first bending tool 300a and a second bending tool 300b.

The first bending tool 300a may bend a lead of a first lead group G1 including at least one first lead L1 and at least one second lead L2. The number of the first leads L1 and the second leads L2 included in the first lead group G1 may be identical, and the first lead L1 and the second lead L2 may be adjacent to each other.

The second bending tool 300b may be positioned on one side of a first direction (a positive direction of D1 axis) of the first lead group G1, and may bend a lead of a second lead group G2 including at least one first lead L1 and at least one second lead L2. The second lead group G2 may be the remainder, excluding the first lead group G1 among the plurality of the first leads L1 and the plurality of second leads L2. The second lead group G2 may be a group of at least one first lead L1 and at least one second lead L2 disposed on one side of the first direction of the first lead group G1.

The first bending tool 300a and the second bending tool 300b may be configured to bend two or more leads at the same time among the plurality of first leads L1 and the plurality of second leads L2 having the same polarity. For example, when the first lead group G1 are composed of four first leads L1 and four second leads L2 positioned on the opposite side of the first direction (a negative direction of D1 axis), and the second lead group G2 are composed of four first leads L1 and four second leads L2 positioned on one side of the first direction, the first bending tool 300a may bend the four second leads L2 of the first lead group G1, and the second bending tool 300b may bend the three first leads L1 of the second lead group G2 at the same time.

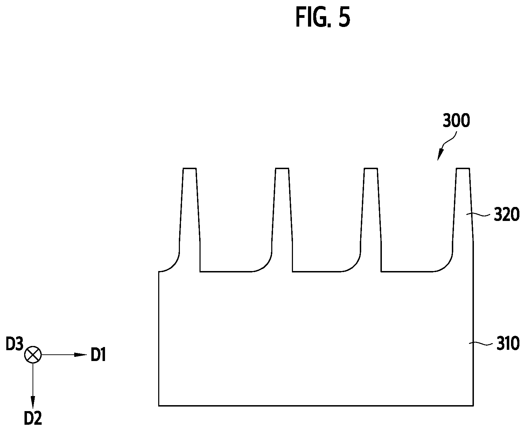

FIG. 5 is a diagram illustrating a bending tool 300 included in a lead bending device according to the present disclosure.

The bending tool 300 may be insulated to prevent being shorted with electrical elements including the leads L1 and L2 of the battery cell stack 10. For example, the bending tool 300 may be a ceramic or peek material.

The bending tool 300 may be configured to be movable in a first direction (for example, a direction D1) and in a second direction (for example, a direction D2) perpendicular to the first direction (the direction D1). The bending tool 300 may include an actuator or may be connected to the actuator and configured to be movable to one side or the opposite side of the first direction (the direction D1) and one side or the opposite side of the second direction (the direction D2).

The bending tool 300 may include a pressing portion 320 and a body portion 310. A plurality of pressing portions 320 may be provided. The plurality of pressing portions 320 may be disposed to be spaced apart at an equal interval along the first direction (the direction D1). The pressing portion 320 may be configured to bend the leads L1 and L2. A height (a length along a direction D3) of the pressing portion 320 may be the same as or longer than a length of the leads L1 and L2 along the direction D3. A plurality of pressing portions 320 may protrude from the body portion 310. A width of the pressing portion 320 (a width along the direction of the D1 axis) may decrease as a distance from the body portion 310 increases along the direction of D2 axis. A connecting portion of the pressing portion 320 and the body portion 310 may be a curved surface or an inclined surface.

Referring to FIGS. 4 and 5, when each number of the plurality of first leads L1 and the plurality of second leads L2 are n, which is an even number, each number of the plurality of pressing portions 320 of the first bending tool 300a and the second bending tool 300b may be no more than n/2. For example, when the number of the first lead L1 is 8, and the number of the second lead L2 is 8, the number of the pressing portions 320 of the first bending tool 300a may be 4, and the number of the pressing portions 320 of the second bending tool 300b may be 3.

The pressing portion 320 may move to the opposite side of the first direction in a state in which each pressing portion 320 is positioned on one side of the first direction of a lead (for example, the first lead L1) having the same polarity among the plurality of leads L1 and L2, or move to the one side of the first direction in a state of being positioned on the opposite side of the first direction to bend a lead (for example, the first lead L1) having the same polarity. Such a bending process may occur at the same time for the plurality of pressing portions 320 and bend the plurality of leads L1 and L2 all at once, and a bending tool may move to one side or the opposite side of the second direction before or after the bending process to adjust a relative position in relation to the leads L1 and L2.

According to such a configuration of the present disclosure, time spent on a bending process may decrease by the plurality of pressing portions 320 bending the plurality of leads L1 and L2 at the same time. Particularly, as the bending tool 300 is composed of the first bending tool 300a and the second bending tool 300 and bends the plurality of leads L1 and L2 at the same time, time spent on the bending process may effectively decrease. In addition, as the connecting portion of the pressing portion 320 and the body portion 310 has an inclined surface or a curved surface, the connecting portion of the pressing portion 320 and the body portion 310 that may be vulnerable when the pressing portion 320 bends a lead may be effectively protected.

In addition, when the pressing portion 320 bends a lead, a part where a lead is bent may be in contact with the lead slit 210 of the busbar frame F, and the reaction force may cause a variation of the battery cell 100 or the busbar frame assembly 200. Particularly, when the reaction force acts in the same direction in the plurality of pressing portions 320, the resultant reaction force increases to cause a severe deformation of the battery cell 100 or the busbar frame assembly 200. In the present disclosure, as a solution for the problem, the number of the plurality of pressing portions 320 may be set no more than half the number of the plurality of leads L1 and L2 to reduce time spent on the bending process at the same time as preventing severe deformation of the battery cell 100 or the busbar frame assembly 200.

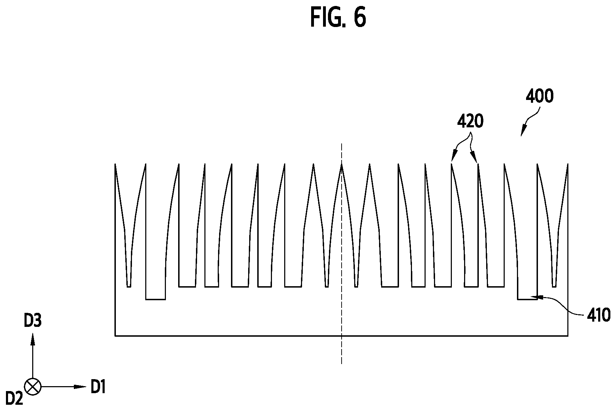

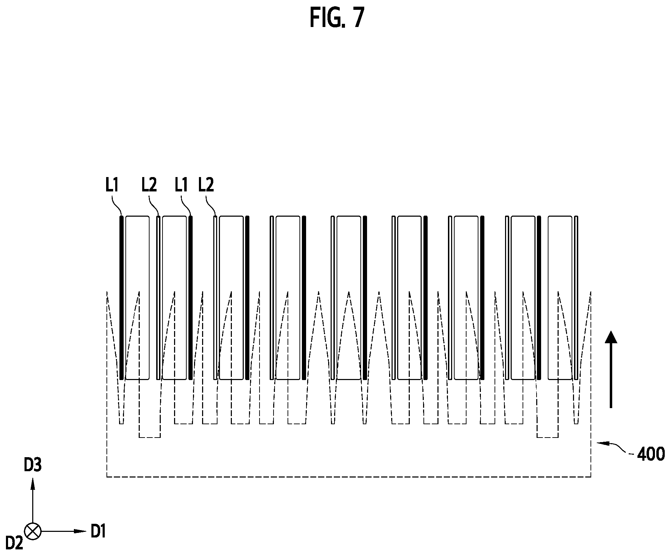

FIG. 6 is a diagram illustrating a comb jig 400 included in a lead bending device according to an example embodiment of the present disclosure. FIG. 7 is a diagram illustrating a relationship between the comb jig 400 and the plurality of leads L1 and L2 included in a lead bending device according to the present disclosure.

Referring to FIGS. 6 to 7, the lead bending device may further include the comb jig 400.

The comb jig 400 may be configured to be movable in a third direction (a direction D3) perpendicular both to a first direction (for example, a direction D1) and a second direction (for example, a direction D2). The comb jig 400 may include a plurality of comb teeth 420. The comb jig 400 may include a plurality of guide slits 410. The plurality of guide slits 410 may be provided between the plurality of comb teeth 420. A plurality of first leads L1 and a plurality of second leads L2 may be inserted into the plurality of guide slits 410. The comb jig 400 may move to one side of a third direction (a direction D3) before a bending process of a lead and align the plurality of first leads L1 and the plurality of second leads L2 substantially in parallel by inserting the plurality of first leads L1 and the plurality of second leads L2 into the plurality of guide slits 410, and then move to the opposite side of the third direction (the direction D3).

The comb jig 400 has, with respect to a center along the first direction (the direction D1), at least one of the plurality of comb teeth 420 positioned on one side of the first direction (the direction D1) whose surface facing the one side of the first direction (the direction D1) is an inclined surface with respect to the first direction (the direction D1), and whose surface facing an opposite side of the first direction (the direction D1) is a perpendicular surface with respect to the first direction (the direction D1). The comb jig 400 has, with respect to a center along the first direction, at least one of the plurality of comb teeth 420 positioned on the opposite side of the first direction (the direction D1) whose surface facing the one side of the first direction (the direction D1) is a perpendicular surface with respect to the first direction (the direction D1), and whose surface facing the opposite side of the first direction (the direction D1) is an inclined surface with respect to the first direction (the direction D1). For example, individual comb teeth 420 included in the comb jig 400 may have an asymmetrical structure, but from the overall perspective of the comb jig 400, comb teeth on the one side and comb teeth on the opposite side may be formed to have a symmetrical structure with respect to a center of a longitudinal direction (for example, the direction D1).

According to such a structure of the present disclosure, the leads L1 and L2 may be aligned not to adhere to each other before a bending process of the leads L1 and L2. Accordingly, a lead that is not aligned may be prevented from being bent in an undesirable direction during the lead bending process.

In addition, the comb jig 400 according to the present disclosure may align the plurality of leads L1 and L2 in parallel more effectively through the aforementioned asymmetrical comb teeth 420 structure. For example, when the busbar frame assembly 200 is designed to have a narrower width than a width of the whole battery cell structure 10, the plurality of leads L1 and L2 penetrating the busbar frame assembly 200 may be somewhat inclined toward a longitudinal direction (the direction D1) of the busbar frame assembly 200. According to the comb jig 400 of the present disclosure, the leads L1 and L2 gathered at a center may be effectively separated and aligned at an equal interval by configuring the remaining comb teeth 420 excluding a center portion along the longitudinal direction (the direction D1) as an asymmetrical shape with an inclined surface.

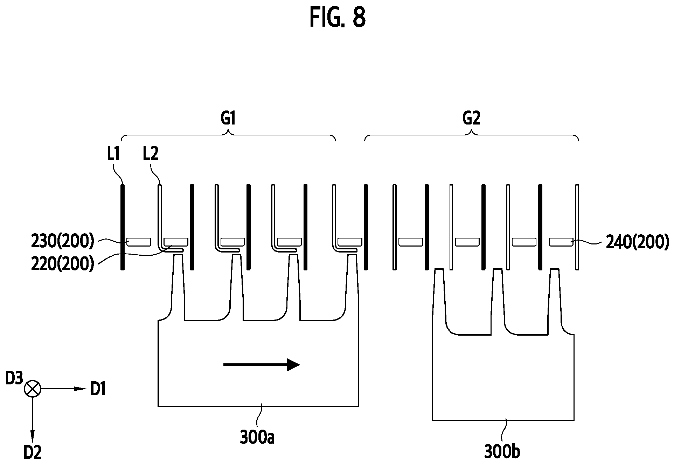

Hereinafter, a method of bending a lead using the aforementioned lead bending device will be described referring to FIGS. 8 to 20.

Referring to FIG. 4 together, a method of bending a lead according to an example embodiment may include forming a first lead group G1 and a second lead group G2 on one surface of a first busbar frame assembly 200 by a plurality of first leads L1 and a plurality of second leads L2 having an opposite polarity to each other and disposed alternately along a first direction (a direction D1) penetrating the first busbar frame assembly 200.

FIG. 8 is a diagram illustrating a first operation included in a method of bending a lead according to the present disclosure.

Referring to FIG. 8, the method of bending a lead may include the first operation in which a first bending tool 300a bends the plurality of second leads L2 included in the first lead group G1 on one side of the first direction (the direction D1). In the first operation, a plurality of pressing portions 320 of the first bending tool 300a may bend the plurality of second leads L2 on one side of the first direction (the direction D1) while moving to a direction facing the one side of the first direction (a positive direction of D1 axis) in a state of being positioned on the opposite side of the first direction (the direction D1) to the plurality of second leads L2.

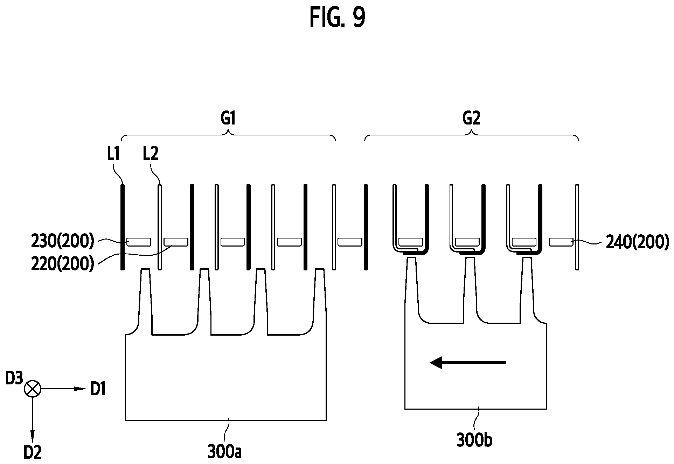

FIG. 9 is a diagram illustrating a second operation included in the method of bending a lead according to the present disclosure.

Referring to FIG. 9, the method of bending a lead may include the second operation in which a second bending tool 300b disposed on one side of the first direction (the direction D1) to be spaced apart from the first bending tool 300a bends the plurality of first leads L1 included in the second lead group G2 to the opposite side of the first direction (the direction D1). In the second operation, a plurality of pressing portions 320 of the second bending tool 300b may bend the plurality of first leads L1 to the opposite side of the first direction (the direction D1) while moving to a direction facing the opposite side of the first direction (for example, a negative direction of D1 axis) in a state of being positioned on the one side of the first direction (the direction D1).

In addition, in the second operation, the second bending tool 300b may bend the plurality of first leads L1 included in the second lead group G2 and bring the plurality of first leads L1 into contact with one surface of a plurality of second leads L2 that are already bent among the second lead group G2.

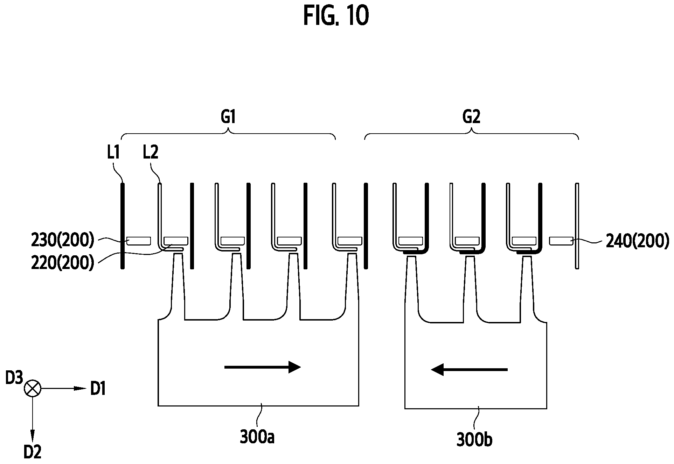

FIG. 10 is a diagram illustrating that a first operation and a second operation included in a method of bending a lead are performed at the same time.

Referring to FIG. 10, the first operation and the second operation may be performed at the same time. In other words, while the first bending tool 300a may bend the plurality of second leads L2 while moving to one side of the first direction (the direction D1), the second bending tool 300b may bend the plurality of first leads L1 while moving to the opposite side of the first width (the direction D1).

According to such a method of the present disclosure, the reaction forces generated in the plurality of first leads L1 and the plurality of second leads L2 may be offset, thereby minimizing the overall magnitude of the reaction force through a bending process in which the plurality of leads are bent in different directions. For example, when one bending tool is to bend multiple leads to one direction at the same time, a force (hereinafter, a bending pressure) that is stronger than a force bending one lead may be needed, and when such a strong bending pressure is continuously applied to one direction, an alignment of the battery cell 100 within the battery cell stack 10 may be disturbed, or the battery cell stack 10 may shift, causing a plurality of leads to be bent incorrectly. For example, the first bending tool 300a that performs the first operation may apply pressure to one side of the first direction (the direction D1) to bend the second lead L2, while the second bending tool 300b that performs the second operation may apply pressure to the opposite side of the first direction (the direction D1) to bend the first lead L1. In this case, from the overall perspective of the battery cell stack 10, the bending pressure that the first bending tool 300a applies to leads of the battery cell stack 10 and the bending pressure that the second bending tool 300b applies to leads of the battery cell stack 10 may be offset against each other, and thereby an external force as much as a difference between two bending forces is merely applied to the battery cell stack 10. As such, the first bending tool 300a and the second bending tool 300b may minimize the total bending pressure applied to the battery cell stack 10, and thereby the method of bending a lead may prevent physical deformation or damage of the battery cell stack 10 and effectively bend multiple leads in a short time.

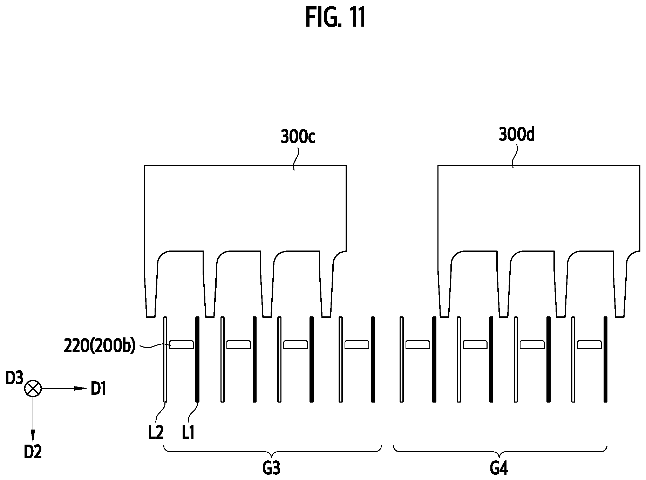

In addition, such a bending method may proceed at both sides in which the leads L1 and L2 of the battery cell 100 protrude in a case of a bi-directional cell in which the leads L1 and L2 of the battery cell 100 protrude in both directions. Such a bending method will be described in detail referring to FIGS. 11 to 14.

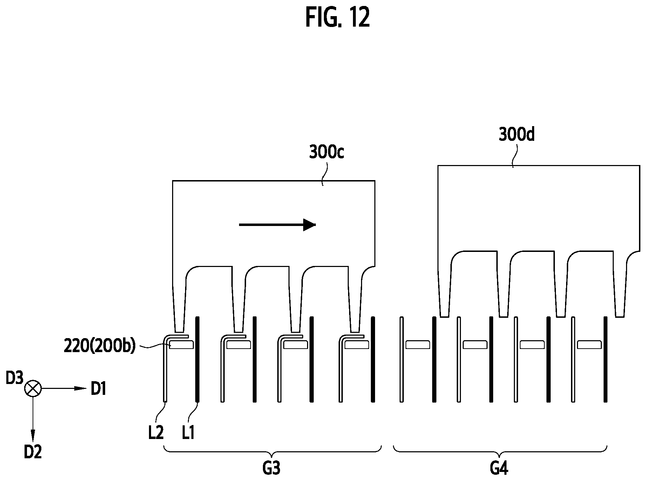

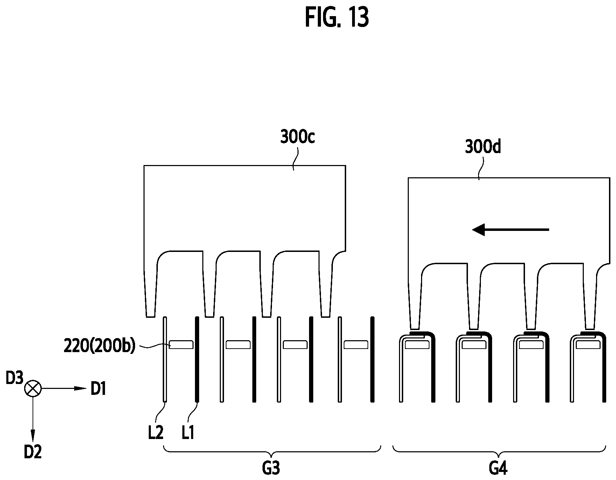

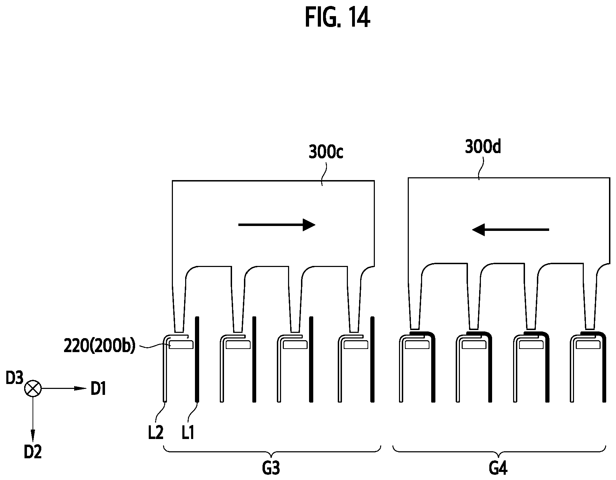

FIG. 11 is a diagram illustrating a relationship between a lead bending device and a plurality of leads according to the present disclosure. FIG. 12 is a diagram illustrating a third operation included in a method of bending a lead according to the present disclosure. FIG. 13 is a diagram illustrating a fourth operation included in a method of bending a lead according to the present disclosure. FIG. 14 is a diagram illustrating that the third operation and the fourth operation included in a method of bending a lead according to the present disclosure are performed at the same time.

Referring to FIG. 11, a method of bending a lead according to an example embodiment may further include forming a third lead group G3 and a fourth lead group G4 on one surface of a second busbar frame assembly 200b by a plurality of second leads L2 and a plurality of first leads L1 that are disposed on the opposite side of a side on which a first busbar frame assembly 200a is disposed with respect to the battery cell stack 10, having an opposite polarity to each other, and disposed alternately along a first direction (a direction D1) penetrating the second busbar frame assembly 200b.

Referring to FIG. 12, the method of bending a lead may further include a third operation in which a third bending tool 300c bends the plurality of second leads L2 included in the third lead group G3 to one side of the first direction (the direction D1). In the third operation, a plurality of pressing portions 320 of the third bending tool 300c may bend the plurality of second leads L2 to one side of the first direction (the direction D1) while moving to the one side of the first direction (the direction D1) in a state of being positioned on the opposite side of the plurality of second leads L2 in the first direction (the direction D1).

Referring to FIG. 13, the method of bending a lead may further include a fourth operation in which a fourth bending tool 300d disposed on one side of the first direction (the direction D1) to be spaced apart from the third bending tool 300c bends the plurality of first leads L1 included in the fourth lead group G4 to the opposite side of the first direction (the direction D1). In the fourth operation, a plurality of pressing portions 320 of the fourth bending tool 300d may bend the plurality of first leads L1 to the opposite side of the first direction (the direction D1) while moving to the opposite side of the first direction (the direction D1) in a state of being positioned on one side of the first direction (the direction D1).

Referring to FIG. 14, the third operation and the fourth operation may be performed at the same time. In other words, while the third bending tool 300c may bend the plurality of second leads L2 while moving to the one side of the first direction (the direction D1), the fourth bending tool 300d may bend the plurality of first leads L1 while moving to the opposite side of the first direction (the direction D1). In addition, as what is described above, the first to the fourth operations may be performed at the same time. Alternatively, operations in which reaction forces are applied in opposite directions may be performed at the same time. For example, the first operation and the fourth operation may be performed at the same time, or the second operation and the third operation may be performed at the same time.

Referring to FIG. 7 together, the method of bending a lead may further include a lead aligning operation performed by the comb jig 400 before the first operation and the second operation are performed at the same time.

The lead aligning operation may be an operation aligning the plurality of first leads L1 and the plurality of second leads L2 by inserting the comb jig 400, including the plurality of guide slits 410 into which the plurality of first leads L1 and the plurality of second leads L2 may be inserted, between the plurality of first leads L1 and the plurality of second leads L2.

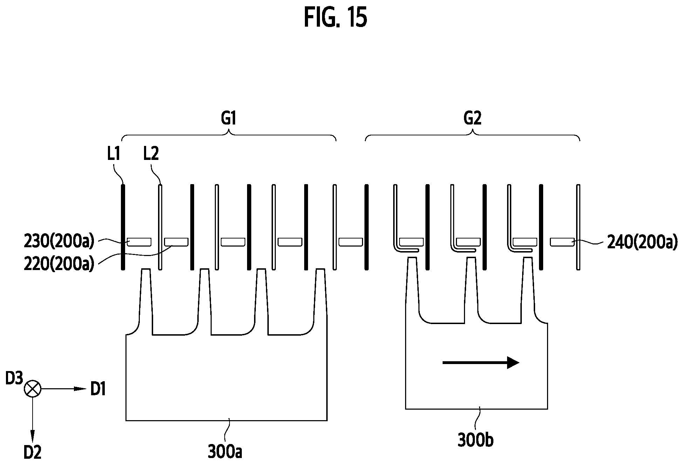

FIG. 15 is a diagram illustrating that a first standby operation and a first solo bending operation included in the method of bending a lead according to the present disclosure are performed at the same time.

Referring to FIG. 15, the method of bending a lead may further include the first standby operation and the first solo bending operation performed before the first operation and the second operation are performed at the same time.

The first standby operation may be an operation in which the first bending tool 300a is on standby in a state of being spaced apart from the leads L1 and L2. The first standby operation may be an operation in which the plurality of pressing portions 320 of the first bending tool 300a are on standby in a state of being positioned on the opposite side of the plurality of second leads L2 in the first direction to proceed with the first operation.

The first solo bending operation may be an operation in which a second bending tool 300b bends the plurality of second leads L2 included in the second lead group G2 on one side of the first direction. The first standby operation and the first solo bending operation may proceed at the same time. After such an operation, an operation in which the plurality of pressing portions 320 of the second bending tool 300b are on standby in a state of being positioned on one side of the plurality of first leads L1 in the first direction may be further included.

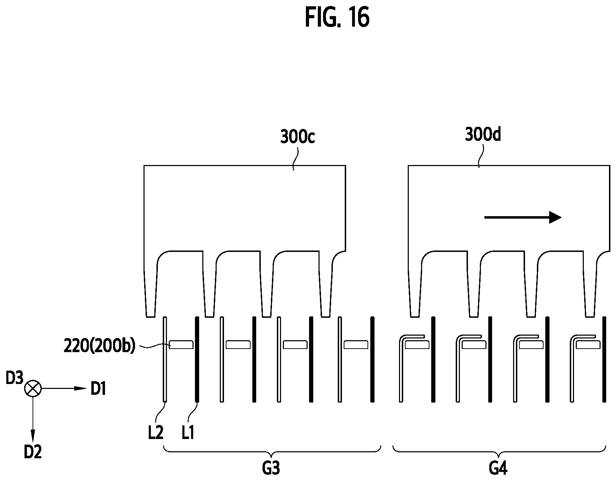

FIG. 16 is a diagram illustrating that a second standby operation and a second solo bending operation included in the method of bending a lead according to the present disclosure are performed at the same time.

Referring to FIG. 16, the method of bending a lead may include the second standby operation and the second solo bending operation performed before the third operation and the fourth operation are performed at the same time.

The second standby operation may be an operation in which the third bending tool 300c is on standby. The second standby operation may be an operation in which the plurality of pressing portions 320 of the third bending tool 300c are on standby to be positioned on the opposite side of the plurality of second leads L2 in the first direction for proceeding the third operation.

The second solo bending operation may be an operation in which a fourth bending tool 300d bends the plurality of second leads L2 included in the fourth lead group G4 to the one side of the first direction. The second standby operation and the second solo bending operation may proceed at the same time. After such an operation, an operation in which the plurality of pressing portions 320 of the fourth bending tool 300d are on standby to be positioned on one side of the plurality of first leads L1 in the first direction may be further included.

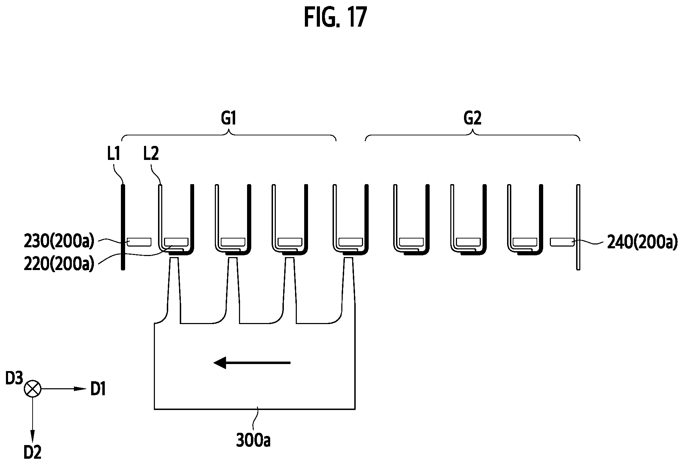

FIGS. 17 to 19 are diagrams illustrating operations performed after a first to a fourth operations included in the method of bending a lead according to the present disclosure are performed.

Referring to FIG. 17, the method of bending a lead may further include a third solo bending operation in which the first bending tool 300a bends the remaining first leads L1, excluding first leads L1 that are to be contact with the first terminal portion 230 among the plurality of first leads L1 of the first lead group G1, to the opposite side of the first direction.

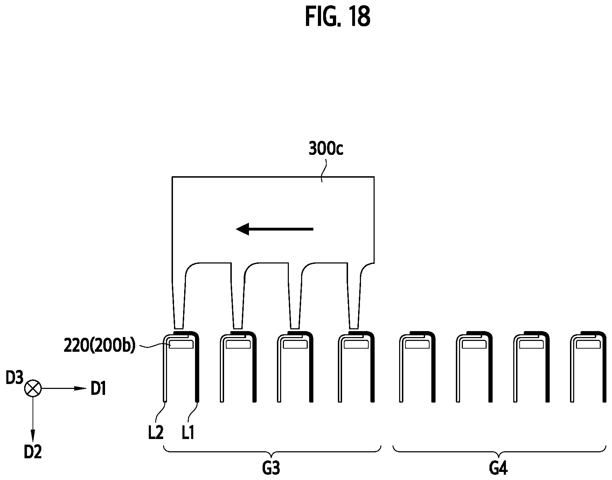

Referring to FIG. 18, the method of bending a lead may further include a fourth solo bending operation in which a third bending tool 300c bends the plurality of first leads L1 included in the third lead group G3 to the opposite side of the first direction.

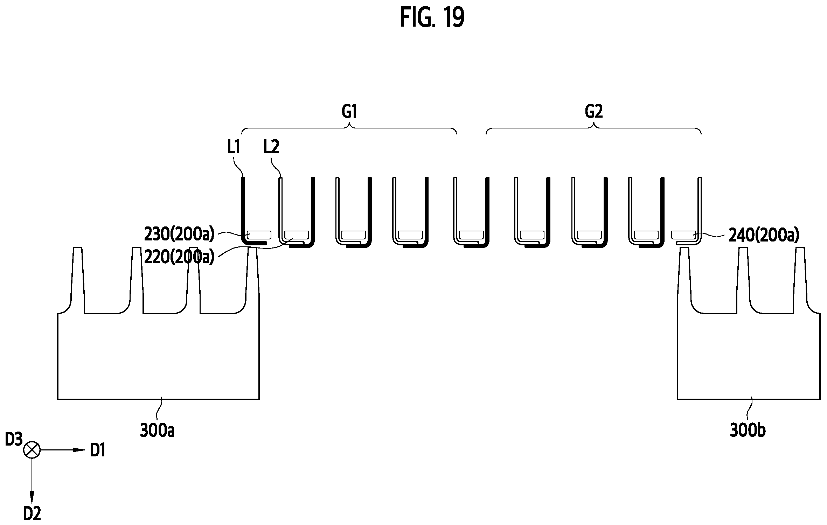

Referring to FIG. 19, the method of bending a lead may further include a first terminal portion contact operation and the second terminal portion contact operation, after the third solo bending operation.

The first terminal portion contact operation may be an operation in which the first lead L1 positioned at the outermost side of the opposite side in the first direction is bent to the opposite side of the first direction to be in contact with the first terminal portion 230.

The second terminal portion contact operation may be an operation in which the second lead L2 positioned at the outermost side of one side in the first direction is bent to one side of the first direction to be in contact with the second terminal portion 240.

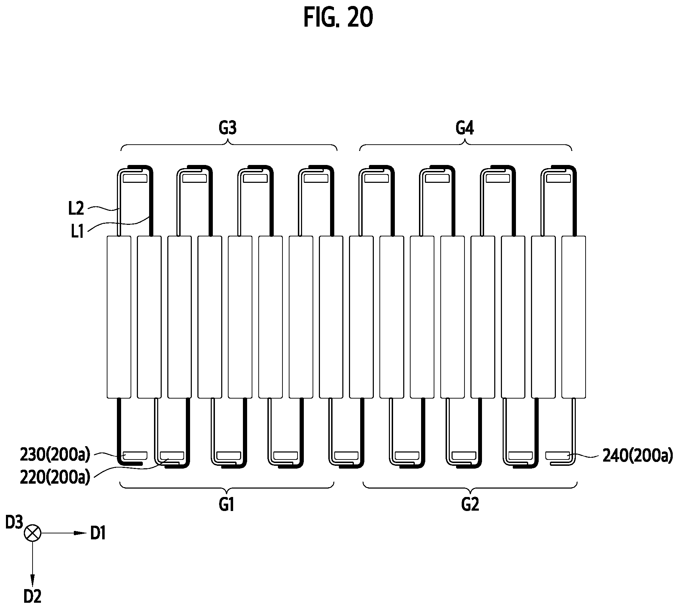

FIG. 20 is a diagram illustrating a state after bending is completed by the method of bending a lead according to the present disclosure.

Referring to FIG. 20, the second lead L2 may be shown as being bent first in every busbar 220. When the second lead L2 includes copper as a negative electrode, the thickness is formed to be substantially 0.2 millimeters (mm), and when the first lead L1 includes aluminum as a positive electrode, the thickness is formed to be substantially 0.4mm. Accordingly, when the second lead L2 is welded while being in contact with the busbar 220 first, the welding strength may be improved, because the restoring force of the thicker first lead L1, which is welded further outward from the busbar 220, is smaller than when the first lead L1 is welded while being in contact with the busbar 220 first.

As described above, the present disclosure is mainly described desirable example embodiments referring to accompanying drawings, but it is obviously understood by those skilled in the art that various and clear multiple modifications included within the spirit and scope of the description are possible. Accordingly, the scope of the present disclosure should be construed by the appended claims described to include such multiple modifications.

### [Description of Symbols]

100 Battery cell
L Lead
L1 First lead
L2 Second lead
G1 First lead group
G2 Second lead group
200 Busbar frame assembly
200a First busbar frame assembly
200b Second busbar frame assembly
F Frame
210 Lead slit
220 Busbar
230 First terminal portion
240 Second terminal portion
300a First bending tool
300b Second bending tool
300c Third bending tool
300d Fourth bending tool
310 Body portion
320 Pressing portion
400 Comb jig
410 Guide slit
420 Comb teeth

## Claims

1. A lead bending device, having an opposite polarity and configured to bend a plurality of first leads and a plurality of second leads that are disposed alternately along a first direction, comprising:
a first bending tool configured to bend a lead of a first lead group that includes at least one of the first leads and at least one of the second leads; and
a second bending tool configured to bend a lead of a second lead group that is positioned on one side of the first lead group in the first direction and including at least one of the first leads and at least one of the second leads,
wherein the first bending tool and the second bending tool are configured to bend two or more leads having an identical polarity at the same time among the plurality of first leads and the plurality of second leads.

2. The lead bending device of claim 1,
wherein each of the first bending tool and the second bending tool is configured to be movable in the first direction and a second direction perpendicular to the first direction.

3. The lead bending device of claim 1,
wherein each of the first bending tool and the second bending tool comprises:
a plurality of pressing portions positioned along the first direction to be spaced apart at an equal interval and configured to bend the lead; and
a body portion from which the plurality of pressing portions protrude.

4. The lead bending device of claim 3,
wherein a connecting portion of the body portion and the plurality of pressing portions has a curved surface.

5. The lead bending device of claim 3,
wherein a thickness of the plurality of pressing portions gradually decreases with increasing distance from the body portion.

6. The lead bending device of claim 1,
wherein each number of the plurality of first leads and the plurality of second leads is n, which is an even number, and
wherein each of the first bending tool and the second bending tool has no more than n/2 of a plurality of pressing portions.

7. The lead bending device of claim 2, further comprising
a comb jig configured to be movable in a third direction perpendicular to both the first direction and the second direction, and
including a plurality of comb teeth and a plurality of guide slits formed between the plurality of comb teeth and into which the plurality of first leads and the plurality of second leads are inserted.

8. The lead bending device of claim 7,
wherein the comb jig has,
with respect to a center in the first direction, at least one of a plurality of comb teeth positioned on one side of the first direction whose surface facing the one side of the first direction is an inclined surface with respect to the first direction and a surface facing an opposite side of the first direction is a perpendicular surface with respect to the first direction, and with respect to a center in the first direction, at least one of a plurality of comb teeth positioned on the opposite side of the first direction whose surface facing the one side of the first direction is a perpendicular surface with respect to the first direction and a surface facing the opposite side of the first direction is an inclined surface with respect to the first direction.

9. A method of bending a lead, the method comprising:
forming a first lead group and a second lead group on one surface of a first busbar frame assembly by a plurality of first leads and a plurality of second leads having an opposite polarity to each other and disposed alternately along a first direction penetrating the first busbar frame assembly;
a first operation in which a first bending tool configured to bend a plurality of second leads included in a first lead group to one side of the first direction; and
a second operation in which a second bending tool, disposed to be spaced apart from the first bending tool on one side of the first direction, bends a plurality of first leads included in the second lead group to an opposite side of the first direction, and
wherein the first operation and the second operation are performed at the same time.

10. The method of bending a lead of claim 9, the method further comprising:
forming a third lead group and a fourth lead group on one surface of a second busbar frame assembly by a plurality of second leads and a plurality of first leads having an opposite polarity to each other on an opposite side of the first busbar frame assembly and disposed alternately along the first direction penetrating the second busbar frame assembly;
a third operation by a third bending tool bending the plurality of second leads included in the third lead group to one side of the first direction; and
a fourth operation by a fourth bending tool, disposed to be spaced apart from the third bending tool on one side of the first direction, bending a plurality of first leads included in the fourth lead group to an opposite side of the first direction, and
wherein the first to the fourth operations are performed at the same time.

11. The method of bending a lead of claim 9,
wherein the first lead is,
a positive electrode tab, and
wherein the second lead is,
a negative electrode tab.

12. The method of bending a lead of claim 11,
wherein each number of the plurality of first leads and the plurality of second leads is n, which is an even number,
wherein, in the first operation,
the first bending tool bends no more than n/2 second leads at the same time, and
wherein in the second operation,
the second bending tool bends no more than n/2 first leads at the same time.

13. The method of bending a lead of claim 9, the method further comprising:
before the first operation and the second operation are performed at the same time,
a first standby operation in which the first bending tool stands by in a state of being spaced apart from the plurality of first leads and the plurality of second leads; and
a first solo bending operation in which the second bending tool bends a plurality of second leads included in the second lead group to one side of the first direction.

14. The method of bending a lead of claim 9,
wherein the busbar frame assembly includes
a plurality of busbars disposed along the first direction; and
a first terminal portion and a second terminal portion, each of which is disposed on one side and an opposite side of the plurality of busbars in the first direction, and,
the method further comprising:
after the first operation and the second operation are performed at the same time,
a first terminal portion contact operation bending a first lead, positioned at the outermost side on an opposite side of the first direction, to the opposite side of the first direction and bring the first lead into contact with the first terminal portion; and
a second terminal portion contact operation bending a second lead, positioned at the outermost side on one side of the first direction to the one side of the first direction and bring the second lead into contact with the second terminal portion.

15. The method of bending a lead of claim 9, the method further comprising:
before the first operation and the second operation are performed at the same time, a lead aligning operation that aligns the plurality of first leads and the plurality of second leads in parallel by inserting a comb jig that includes a plurality of guide slits, into which the plurality of first leads and the plurality of second leads are inserted, between the plurality of first leads and the plurality of second leads.

16. The method of bending a lead of claim 9,
wherein in the second operation, the second bending tool bends the plurality of first leads included in the second lead group and brings the plurality of first leads into contact with one surface of a plurality of second leads that are already bent.

17. The method of bending a lead of claim 9,
wherein a moving direction of the first bending tool in the first operation is opposite to a moving direction of the second bending tool in the second operation.
